# EUROPEAN PATENT APPLICATION

(11) **EP 4 809 812 A1**
(43) Date of publication of application: **23.09.2026**
(21) Application number: 25164051.2
(22) Date of filing: 17.03.2025
(51) Int. Cl.: A01D 43/063

(54) **AN ATTACHMENT ELEMENT FOR A GARDENING DEVICE**

(71) Applicant: Husqvarna AB, 561 82 Huskvarna (SE)
(72) Inventor: Mock, Axel, 89134 Blaustein (DE)
(74) Representative: Finkele, Rolf

(57) **Abstract**

An attachment element (124) for a gardening device (100) is formed from a middle part (136) and two side parts (134) connected by the middle part (136). The attachment element (124) comprises a coupling portion (138) formed on at least one of the two side parts (134), and configured such that the attachment element (124) is couplable to a handle (104) of the gardening device (100). The attachment element (124) also comprises a connecting section (140) formed on the middle part (136) and/or on at least one of the two side parts (134) and configured to connect a collecting bag fastening element (126) to the attachment element (124). The collecting bag fastening element (126) is configured to connect the collecting bag (122) and the gardening device (100) and further support the collecting bag (122) in an operational position. The attachment element (124) further comprises a storage portion (142) formed on at least one of the two side parts (134) and configured to hang the collecting bag (122) onto the storage portion (142) in a storage position.

## Description

### TECHNICAL FIELD

The present disclosure relates to an attachment element adapted to be coupled to the lawnmower. Furthermore, the present disclosure relates to a gardening device, in particular, a lawnmower.

### BACKGROUND

Today, lawnmower users have various options for disposing of grass clippings and other lawn debris. Some users opt to forgo a collecting bag, leaving the clippings on the lawn where they decompose naturally. Alternatively, mower designs are available which retain the clippings and mulch them further before depositing them back onto the grass surface. However, this method may lead to a build-up of material over time, which may affect the lawn's health. A further alternative is to collect the clippings inside the collecting bag for disposal or further use.

Sometimes, the collecting bag is simply placed onto the lawnmower due to the absence of a dedicated storage attachment. This may have the disadvantage that the collecting bag falls off when the lawnmower is in use or when it is touched. Alternatively, a strap designed to secure the collecting bag, is fixedly attached directly to the collecting bag itself rather than to the lawnmower. This may result in a configuration in which, when the user empties the collecting bag, the strap along with a metal hook, may become a hindrance, causing inconvenience and interfering with the user's ability to efficiently handle the collecting bag.

An example of a lawn mower with an attached collecting bag is provided by United States Patent US 2,830,428 A (hereinafter referred to as '428 reference). The '428 reference discloses a rotary bar-type lawn mower that features a frame with parallel axles, each supporting wheels. The ends of the axles have upwardly extended hook members. A grass catcher is detachably engaged over these hooks, positioned next to the discharge exit, to receive and store grass cuttings from the mower. Further, the grass catcher is removable hooked to the guide handles of the lawn mower by a wire strand terminating in a hook adapted to be engaged over one of the guide handles of the lawn mower for supporting the gatherer in grass catching position at one side of the lawn mower.

Another example of the lawnmower with an attached collecting bag is provided by United States Patent US 5,243,809 A (hereinafter referred to as '809 reference). The '809 reference discloses a holder for collecting leaf and lawn debris, which is mounted with its front to a debris exhausting chute of the mower. Further, the other end of the holder is held up by two hooks that fit over the mower handle, allowing for a removable connection to the lawnmower.

### SUMMARY OF THE INVENTION

It is an objective of the present invention to solve or at least reduce the drawbacks discussed above. The objective is at least partially achieved by an attachment element according to the present invention.

According to an aspect of the present invention, an attachment element adapted to be coupled to a gardening device is disclosed. The attachment element is formed from two side parts and a middle part, wherein the middle part connects the two side parts. The attachment element comprises a coupling portion formed on at least one of the two side parts, wherein the coupling portion is configured such that the attachment element is couplable to the gardening device, in particular to a handle of the gardening device. The attachment element further comprises a connecting section formed on the middle part and/or on at least one of the two side parts, wherein the connecting section is configured to connect a collecting bag fastening element to the attachment element, wherein the collecting bag fastening element is configured to connect the collecting bag and the gardening device and further configured to support the collecting bag in an operational position. The attachment element further comprises a storage portion formed on at least one of the two side parts, wherein the storage portion is configured to hang the collecting bag onto the storage portion in a storage position.

The present disclosure provides an attachment element that is securely connectable to the gardening device, ensuring that the collecting bag has a fixed storage space on the gardening device during non-use, and at the same time ensuring that the collecting bag fastening element has a defined fixing position on the gardening device. During a non-use respectively in a storage position, this prevents the collecting bag from getting lost and keeps it easy to reach when needed. Further, in the storage position, a second end of the collecting bag fastening element is placeable and hookable onto the handle. Hence, the collecting bag fastening element is attached to the attachment element at all times. Therefore, amongst others, the collecting bag fastening element, so it does not get in the way when emptying the collecting bag. When the collecting bag is mounted onto the gardening device, the second end of the collecting bag fastening element is hooked to the collecting bag to support the collecting bag during use of the gardening device respectively in an operational position. With the collecting bag fastening element positioned properly, users may easily dispose of grass clippings without any hassle. The disclosed attachment element respectively the disclosed gardening device, may allow to make gardening tasks smoother, more comfortable, and more efficient.

The operational position according to the present invention may be the position of the collecting bag, when the collecting bag is properly positioned and secured, ready to collect and store grass clippings and/or other debris. Furthermore, in the operational position according to the present invention, the collecting bag fastening element is connected with the attachment element and at the same time with the collecting bag. Particularly, a first end of the collecting bag fastening element is coupled to the connecting section and at the same time a second end of the collecting bag fastening element is coupled to the collecting bag, particularly by hook. In particular, the operational position may be such that during use a bottom of the collecting bag is held substantially parallel to the lawn to be mowed, by coupling the collecting bag fastening element with the attachment element and the collecting bag.

The storage position according to the present invention may be the position of the collecting bag when the collecting bag is demounted from the gardening device and folded or otherwise positioned for compact storage, out of the way of operational use and not intended for collecting grass clippings and/or other debris. Furthermore, in the storage position according to the present invention, the collecting bag, particularly the folded collecting bag, is hung onto the at least one storage portion of the attachment element.

According to an exemplary embodiment of the present invention, the attachment element is substantially U-shaped with a flat middle part. Such a design may provide increased stability and support by evenly distributing forces across the surface, making it capable of handling loads and stress with decreased bending and/or without failing. Further, the flat middle part may ensure precise alignment, allowing for secure and accurate mounting onto the handle of the gardening device. Furthermore, the U-shape with a flat middle part of the attachment element may allow fastening of the attachment element at two points of the gardening device, particularly at two points of the handle of the gardening device.

According to an exemplary embodiment of the present invention, the legs of the U-shape may be symmetrically curved relative to the flat middle part. According to an exemplary embodiment of the present invention, the flat middle part has a length that may be at least 0.75 times the width of the legs. According to an exemplary embodiment of the present invention, the two side parts that may be tapered inward toward the flat middle section to increase stability when mounted. According to an exemplary embodiment of the present invention, the U-shape may be formed from a single continuous piece of material, providing greater strength and reducing the potential for material failure at the junctions. According to an exemplary embodiment of the present invention, the U-shape may comprise a respective rounded edge at the junction between the flat middle part and each of the two side parts. Thereby, a risk of sharp corners causing material fatigue may be decreased. According to an exemplary embodiment of the present invention, the U-shape may be designed with a variable leg length, with one leg being longer than the other to accommodate different mounting configurations or alignment requirements.

According to an exemplary embodiment of the present invention, the attachment element comprises two coupling portions, one on each of the two side parts. In particular, the two coupling portions are formed substantially identical. The two coupling portions are configured to couple the attachment element with the handle of the gardening device. Further, by forming the coupling portions substantially identical, the attachment element may ensure ease of assembly, as both sides may be mounted and secured in the same manner. This uniformity may simplify manufacturing processes and reduce the risk of errors during installation leading to improved reliability and cost-effectiveness in production and use.

According to an exemplary embodiment of the present invention, the coupling portions may be designed to be complementary to corresponding fastening elements on the handle, ensuring secure and stable attachment. According to an exemplary embodiment of the present invention, the coupling portions may comprise interlocking features, such as grooves or tabs, to prevent unintended separation when mounted. According to an exemplary embodiment of the present invention, the coupling portions may be molded integrally with the side parts of the attachment element, creating a seamless and structurally reinforced connection.

According to an exemplary embodiment of the present invention, the attachment element is coupled to the handle of the gardening device via a removable coupling, in particular, by means of a screw connection. This design may allow for quick attachment and detachment, making it convenient to switch or remove the attachment element when necessary, such as for cleaning, maintenance, or replacing with another tool. The screw connection may ensure a secure and stable attachment during use, preventing accidental disconnection, while also offering a simple and reliable method for reattaching the attachment element.

According to an exemplary embodiment of the present invention, the coupling portions according to the present invention are each formed as a hole. The two holes are formed opposite to each other, one in each of the two side parts. Hence, a screw which is mounted to the handle of the gardening device may at the same time be used for mounting the attachment element to the handle of the gardening device.

According to an exemplary embodiment of the present invention, the connecting section is configured to connect a first end of the collecting bag fastening element to the attachment element. In particular, the collecting bag fastening element is a belt or a strap. The connecting section may be designed to securely couple the first end of the collecting bag fastening element to the connecting section. Thereby, the first end may be reliably attached to the attachment element. This coupling is configured such that it exists both in the operational position, when the collecting bag is in use and therefore coupled respectively hooked to another end of the collecting bag fastening element, as well as in the storage position, when the bag is not used and therefore hung on the attachment element for storage. Thereby, a consistent and secure attachment of the collecting bag fastening element with the attachment element is ensured in all configurations.

According to an exemplary embodiment of the present invention, the connecting section is formed as a bar-shaped element extending between the two side parts. In particular, one end of the bar-shaped element is connected to one of the two side parts and another end of bar-shaped element is connected to another of the two side parts. The bar-shaped element extending between the two side parts may be configured to securely couple with the first end of the collecting bag fastening element. Additionally, it may provide enhanced structural stability and rigidity to the attachment element. Further, by connecting the two side parts through a solid bar, the design may ensure that the attachment element remains secure and resistant to deformation during use.

According to an exemplary embodiment of the present invention, the connecting section may be integrally formed with the two side parts, providing a continuous and seamless connection that may enhance the overall strength and durability of the attachment element. According to an exemplary embodiment of the present invention, the ends of the connecting section may be each connected to the side parts via a reinforced fastener, such as a rivet or bolt, to ensure a secure and long-lasting connection. According to an exemplary embodiment of the present invention, a rib, in particular a reinforcing rib, is formed between the respective side part and the respective end of the connecting section. Hence, a stability of the connecting section may be increased.

According to an exemplary embodiment of the present invention, in an operational position, the collecting bag fastening element connects the collecting bag and the gardening device, and/or, in a storage position, the collecting bag is hung onto the storage portion.

In the operational position, the collecting bag fastening element may be attach respectively hooked to the collecting bag, ensuring it stays in place while the gardening device is in use, making it efficient for collecting grass clippings and/or other debris. When not in use, the storage position may provide an easy and organized way to hang the collecting bag onto the gardening device, keeping it out of the way, preventing damage, and saving storage space. This dual functionality of the attachment element may simplify the transition between tasks, reduces clutter, and enhance the overall user experience, while also increasing the service life of the collecting bag.

According to an exemplary embodiment of the present invention, the attachment element comprises two storage portions, one on each of the two side parts. In particular, the two storage portions are formed substantially identical. The storage portions are configured to allow hanging of the collecting bag in an organized way, when the collecting bag is not used for collecting grass clippings and/or other debris. Further, by identically forming the storage portions, the attachment element may be manufactured in a simplified way. Additionally, a symmetrical design may improve the overall aesthetic appearance of the attachment element. In particular, a user-friendliness of the attachment element may be increased.

According to an exemplary embodiment of the present invention, the two storage portions may be integrally formed with the corresponding side parts. Hence, a continuous and seamless connection may be provided which may enhance the overall strength and durability of the attachment element. According to an exemplary embodiment of the present invention, the two storage portions may be each connected to the corresponding side parts via a reinforced fastener, such as a rivet or bolt. Hence, a secure and long-lasting connection may be ensured.

According to an exemplary embodiment of the present invention, the storage portion is a hook-shaped portion extending from at least one of the two side parts. The hook-shaped portion may provide a curved structure that may easily catch and support the collecting bag. Additionally, a hook-shaped portion may prevent that the collecting bag from slipping off. Further, the hook-shaped portion provides an open design that allows quick and effortless attachment or removal. Hence, convenience may be increased, and time may be saved.

According to a further aspect of the present invention, a gardening device, wherein an attachment element as described above, is coupled to the gardening device, in particular to a handle of the gardening device, is disclosed.

The present disclosure provides a gardening device with the attachment element that is securely coupled to the gardening device, ensuring that the collecting bag has a fixed storage space on the gardening device during non-use, and at the same time ensuring that the collecting bag fastening element has a defined fixing position on the gardening device at all times. During a non-use respectively in a storage position, this prevents the collecting bag from getting lost and keeps it easy to reach when needed. Further, in the storage position, a second end of the collecting bag fastening element is placeable and hookable onto the handle. Hence, the collecting bag fastening element is attached to the gardening device, particularly the handle of the gardening device, at all times. Therefore, amongst others, the collecting bag fastening element does not get in the way when emptying the collecting bag. When the collecting bag is mounted onto the gardening device, the second end of the collecting bag fastening element is hooked to the collecting bag to support the collecting bag during use of the gardening device respectively in an operational position. With the collecting bag fastening element positioned properly, users may easily dispose of grass clippings without any hassle. The described gardening device may make gardening tasks smoother, more comfortable, and more efficient.

Furthermore, the gardening device is provided with the attachment element coupled to it, that securely holds the collecting bag in place, providing a dedicated storage space on the gardening device. This ensures that the collecting bag is always easy to find and doesn't get misplaced.

According to an exemplary embodiment of the present invention, a collecting bag fastening element is connected to the attachment element, wherein, in an operational position, the collecting bag fastening element connects the collecting bag and the gardening device and supports the collecting bag.

The collecting bag fastening element, e.g., a strap or belt, may be carefully coupled and/or hooked onto the handle, so it doesn't get in the way when a user needs to empty the collecting bag. With everything properly positioned, a user may quickly and easily dispose of grass clippings without any trouble. This smart design makes gardening tasks more efficient, comfortable, and hassle-free, allowing users to focus on their work without unnecessary interruptions.

According to an exemplary embodiment of the present invention, in an operational position, the first end of the collecting bag fastening element is connected to the attachment element and a second end of the collecting bag fastening element is connected to the collecting bag by means of a coupling element, and/or, in a storage position, the first end of the collecting bag fastening element is connected to the attachment element and a second end of the collecting bag fastening element is connectable to the handle by means of a coupling element.

In the operational position, this arrangement may ensure that the collecting bag may be securely fastened to the gardening device, preventing any shifting or detachment during use, which may lead to more efficient grass clippings and/or other debris collection. In the storage position, this arrangement may ensure that the collecting bag fastening element has a dedicated storage space on the gardening device.

According to an exemplary embodiment of the present invention, the coupling element is a hook-shaped element. The first end of the collecting bag fastening element may be securely coupled to the attachment element, while the second end may be hooked onto the handle via the hook-shaped element when the collecting bag is not in use for supporting the collecting bag. When the collecting bag is needed to gather grass clippings and/or other debris, the first end may remain coupled to the attachment element, and the second end may be hooked onto the collecting bag via the hook-shaped element, ensuring a stable and secure connection during operation. Further, the hook-shaped element may be manufactured in a cost-efficient way and may be easy and reliable useable.

According to an exemplary embodiment of the present invention, the collecting bag fastening element comprises an adaptable length. The adaptable length of the collecting bag fastening element may be adapted to ensure that the collecting bag is positionable substantially parallel to the lawn to be mowed. Hence, the gardening device is usable by users of different body heights.

According to an exemplary embodiment of the present invention, the gardening device is a lawnmower, in particular, a manual lawnmower. The lawnmower may comprise a handle configured not only to provide the user with control and ease of maneuverability while mowing but also to offer a convenient and dedicated storage space for both the collecting bag and the collecting bag fastening element. In other words, the handle of the lawnmower may ensure that the handle serves a dual purpose, allowing the user to effortlessly guide the mower across the lawn while also keeping essential components, like the collecting bag, securely stored when not in use. The integrated storage space may help reduce clutter and ensure that the collecting bag and the collecting bag fastening element are always within reach, making it quick and easy to attach or detach them as needed.

Before discussing the invention with the help of the drawings, the invention will be briefly discussed in general. An attachment element is provided that is removably attachable to a handle of a gardening device, particularly by a screw connection. The attachment element allows a user to hang a collecting bag onto the gardening device in a space-saving and easy way during storage or non-use of the gardening device. The attachment element further supports removable connection with an end of a collecting bag fastening element, the other end of which is provided with a hook-shaped coupling element. During storage, this hook-shaped coupling element is hooked in/to the handle of the gardening device such that the collecting bag fastening element is cleared away.

The attachment element according to the present invention may ensure that the collecting bag may not get lost and may have a defined place on the gardening device where it may be stored in a space-saving way. The attachment element according to the present invention may ensure that the collecting bag fastening element may not disturb when emptying the collecting bag, because it is placed and hooked in/to the handle of the gardening device at a position distant from the attachment element.

According to an exemplary embodiment of the present invention, the attachment element may be removably attached to the handle of the gardening device and may comprise storage hooks for the collecting bag and connecting section for the collecting bag fastening element.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective view of a gardening device with a collecting bag in an operational position according to an exemplary embodiment of the present invention;
**FIG. 2** illustrates a back perspective view of an attachment element according to an exemplary embodiment of the present invention;
**FIG. 3** illustrates a front perspective view of an attachment element according to an exemplary embodiment of the present invention;
**FIG. 4** illustrates a perspective view of a gardening device with a collecting bag in a storage position according to an exemplary embodiment of the present invention;
**FIG. 5** illustrates a perspective view of a gardening device with a collecting bag fastening element in a storage position according to an exemplary embodiment of the present invention; and
**FIG. 6** illustrates a further perspective view of a gardening device with a collecting bag fastening element in a storage position according to an exemplary embodiment of the present invention.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

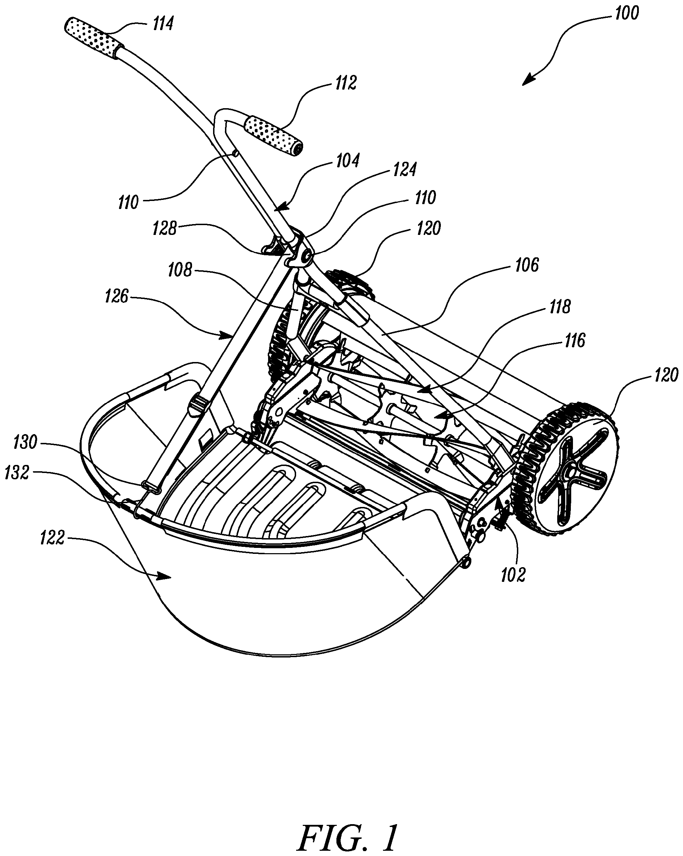

FIG. 1 illustrates a perspective view of a gardening device 100 with the collecting bag 122 in an operational position. The gardening device 100 is a manual walk-behind lawnmower 100 operated and maneuvered entirely by a user through physical effort. The gardening device 100 comprises a frame 102 that supports the entire structure of the gardening device 100. A handle 104 having a first arm 106 and a second arm 108 extend upwards from the frame 102 in a spaced-apart configuration at an ergonomic angle for comfortable operation. The first arm 106 and the second arm 108 have a curved shape. Further, each of the first arm 106 and the second arm 108 extends upward from the frame 102 toward each other before transitioning into a parallel alignment. The first arm 106 and the second arm 108 then further extend outward and away from each other. At a free end section of the first arm 106, a gripping portion 112 is provided. Further, at a free end section of the second arm 108, a gripping portion 114 is provided. In the region where the first arm 106 and the second arm 108 extend parallel to each other, the first arm 106 and the second arm 108 are securely fastened at one or more positions by screws 110.

Additionally, the gardening device 100 comprises a cutting system 116 and a pair of wheels 120. The cutting system 116 comprises a cylindrical reel blade assembly 118 with multiple precision-ground rotating blades. As the gardening device 100 is pushed forward, the wheels 120 rotate, engaging a gear mechanism, that drives the blades, causing them to spin and effectively cut the grass.

A collecting bag 122 is coupled to the frame 102 of the lawnmower 100 and an attachment element 124 is coupled to the handle 104 of the lawnmower 100. The attachment element 124 is coupled to the handle 104 in the region where the first arm 106 and the second arm 108 extend parallel to each other and are in contact with each other. Further, the attachment element 124 is removably coupled to the handle 104 by means of a screw 110.

Additionally, a collecting bag fastening element 126 is connected to the attachment element 124 and is a belt 126. The collecting bag fastening element 126 has an adaptable length. The collecting bag fastening element 126 comprises a first end 128 and an opposite second end 130.

In the operational position, as illustrated in FIG. 1, the first end 128 of the collecting bag fastening element 126 is connected to the handle 104 by being connected to the attachment element 124. Further, the second end 130 of the collecting bag fastening element 126 comprises a hook-shaped coupling element 132 which is hooked to the collecting bag 122 such that the collecting bag 122 is stably and reliably supported in the operational position. In other words, the collecting bag fastening element 126 connects the collecting bag 122 and the gardening device 100 via the attachment element 124. Further, the collecting bag fastening element 126 supports the collecting bag 122 in the operational position.

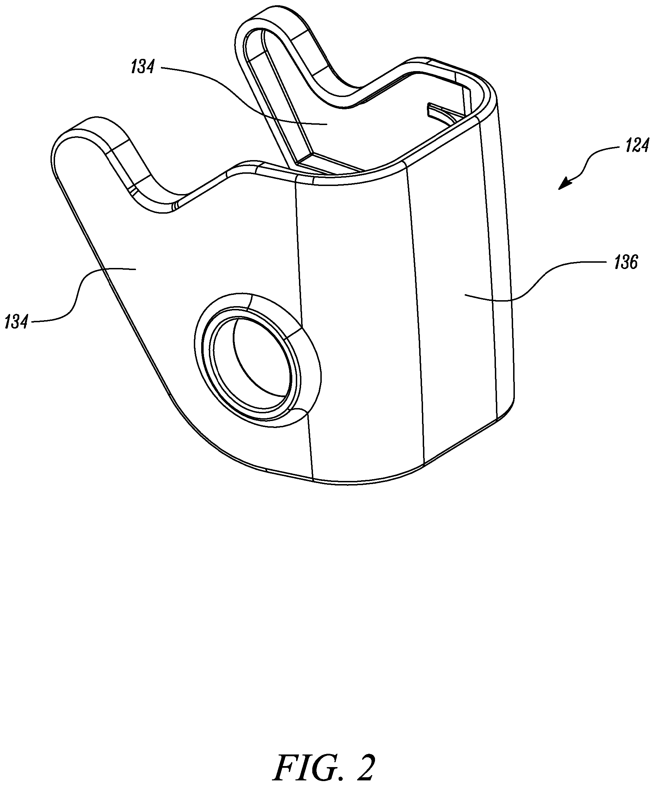

FIG. 2 illustrates a back perspective view of the attachment element 124. The attachment element 124 comprises respectively is formed from two side parts 134 and a middle part 136, wherein the middle part 136 extends between respectively connects the two side parts 134. As illustrated in FIG. 2, the attachment element 124 is substantially U-shaped with a flat middle part 136.

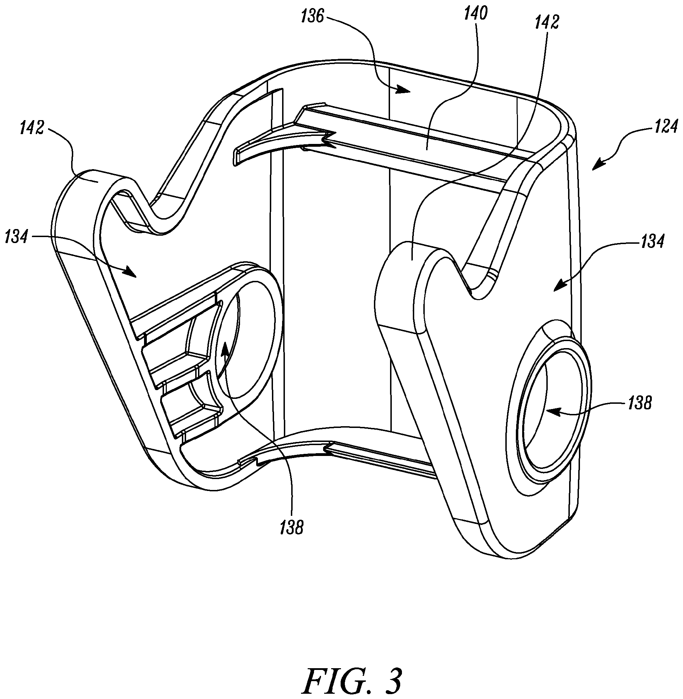

FIG. 3 illustrates a front perspective view of the attachment element 124. The attachment element 124 comprises two coupling portions 138, one on each of the two side parts 134. The two coupling portions 138 are configured such that the attachment element 124 is couplable to the handle 104 of the gardening device 100 by means of one of the screws 110. In other words, one of the screws 110 connecting the first arm 106 and the second arm 108 also passes through the two coupling portions 134. Thereby, at the same time, the first arm 106 and the second arm 108 are mounted to each other and the attachment element 124 is securely coupled to the handle 104. The two coupling portions 138 are formed substantially identical. Further, the two coupling portions 138 have a circular profile.

Further, the attachment element 124 comprises a connecting section 140 formed as a bar-shaped element 140 extending between the two side parts 134. Furthermore, one end of the bar-shaped connecting section 140 is connected to the one side part 134 and another end of bar-shaped connecting section 140 is connected to the other side part 134. The connecting section 140 is configured to connect the collecting bag fastening element 126 to the attachment element 124.

As illustrated in FIG. 3, the attachment element 124 comprises two storage portions 142 one on each of the two side parts 134. Each of the two storage portions 142 is configured to hang the collecting bag 122 onto the two storage portions 142 in a storage position. The two storage portions 142 are formed substantially identical and are formed with a hook-shaped profile. **In** other words, each storage portion 142 is a hook-shaped portion extending from one of the two side parts 134.

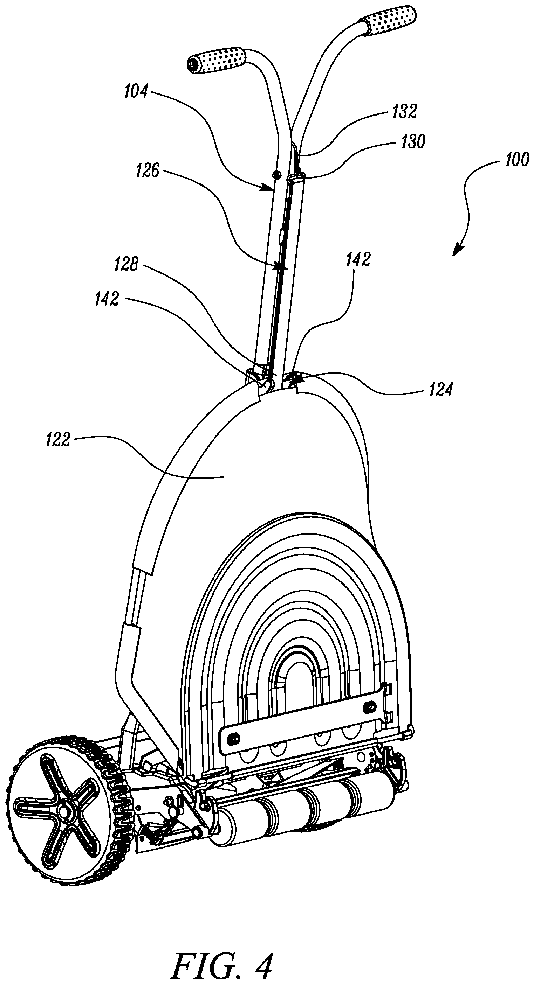

FIG. 4 illustrates another perspective view of the gardening device 100 with a collecting bag 122 in a storage position. The attachment element 124 is coupled to the gardening device 100 by the screw 110 (see FIG. 1). The attachment element 124 comprises the two storage portions 142 onto which the collecting bag 122 is hung in a removable manner. Furthermore, the collecting bag fastening element 126 is connected to the attachment element 124. In the storage position as illustrated in FIG. 4, the first end 128 of the collecting bag fastening element 126 is connected to the attachment element 124 and the second end 130 of the collecting bag fastening element 126 is hooked to the handle 104 by use of the coupling element 132.

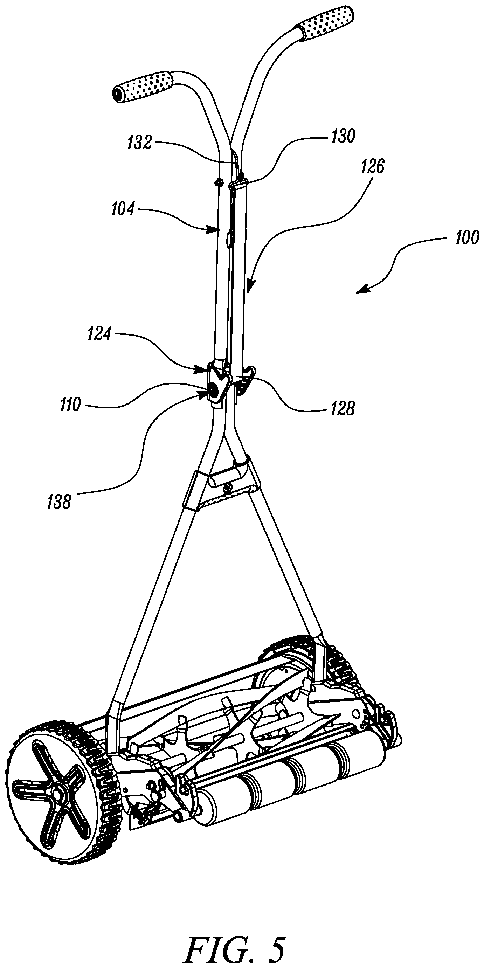

FIG. 5 illustrates a perspective view of the gardening device 100 without the collecting bag 122, but with the collecting bag fastening element 126 in the storage position. The collecting bag fastening element 126 is a belt with the first end 128 and the second end 130 spaced apart from and opposite to the first end 128. The first end 128 of the collecting bag fastening element 126 is connected to the connecting section 140 of the attachment element 124. Further, the attachment element 124 is connected to the handle 104 by a removable engagement between the two coupling portions 138 and the screw 110. Further, a hook 132 is attached to the second end 130 of the collecting bag fastening element 126 which in turn is hooked onto the handle 106 during non-use and/or storage.

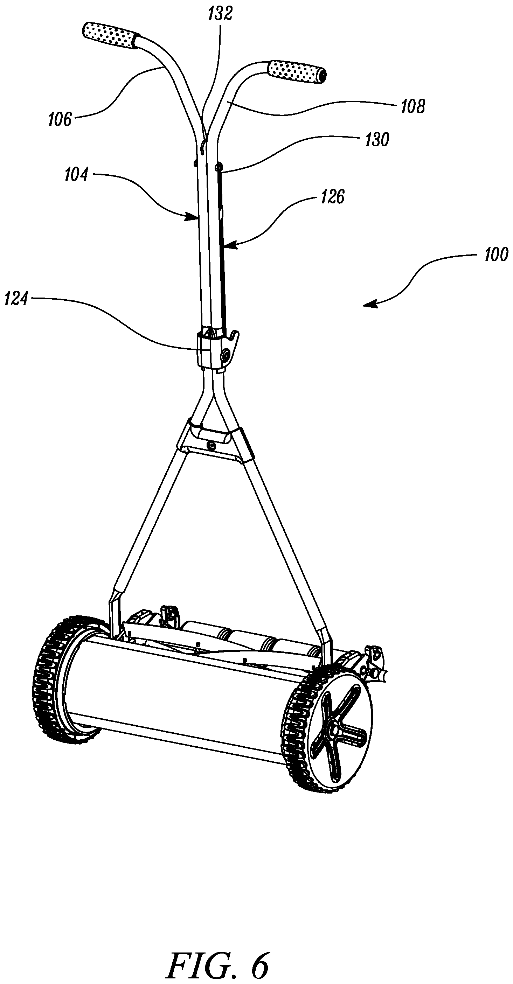

FIG. 6 illustrates a further perspective view of the gardening device 100, with the collecting bag fastening element 126 in the storage position. In the storage position as illustrated in FIG. 6, the hook-shaped coupling element 132 is attached to the second end 130 of the collecting bag fastening element 126 which in turn is hooked onto the handle 104 by use of the coupling element 132. The hook-shaped coupling element 132 is hooked between the first arm 106 and the second arm 108 of the handle 104 at the junction from where the first arm 106 and the second arm 108 extend outward and away from each other.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Gardening Device
- **102**: Frame
- **104**: Handle
- **106**: First Arm
- **108**: Second Arm
- **110**: Screws
- **112**: Gripping Portion
- **114**: Gripping Portion
- **116**: Cutting System
- **118**: Cylindrical Reel Blade Assembly
- **120**: Wheels
- **122**: Collecting Bag
- **124**: Attachment Element
- **126**: Collecting Bag Fastening Element
- **128**: First End
- **130**: Second End
- **132**: Coupling Element
- **134**: Side Parts
- **136**: Middle Part
- **138**: Coupling Portion
- **140**: Connecting Section
- **142**: Storage Portion

## Claims

1. An attachment element (124) adapted to be coupled to a gardening device (100),
wherein the attachment element (124) is formed from two side parts (134) and a middle part (136), wherein the middle part (136) connects the two side parts (134),
wherein the attachment element (124) comprising:
a coupling portion (138) formed on at least one of the two side parts (134), wherein the coupling portion (138) is configured such that the attachment element (124) is couplable to the gardening device (100), in particular to a handle (104) of the gardening device (100),
a connecting section (140) formed on the middle part (136) and/or on at least one of the two side parts (134), wherein the connecting section (140) is configured to connect a collecting bag fastening element (126) to the attachment element (124), wherein the collecting bag fastening element (126) is configured to connect the collecting bag (122) and the gardening device (100), and further configured to support the collecting bag (122) in an operational position, and
a storage portion (142) formed on at least one of the two side parts (134), wherein the storage portion (142) is configured to hang the collecting bag (122) onto the storage portion (142) in a storage position.

2. The attachment element (124) according to claim 1,
wherein the attachment element (124) is substantially U-shaped with a flat middle part (136).

3. The attachment element (124) according to any one of the preceding claims,
wherein the attachment element (124) comprises two coupling portions (138), one on each of the two side parts (134),
in particular wherein the two coupling portions (138) are formed substantially identical.

4. The attachment element (124) according to any one of the preceding claims,
wherein the attachment element (124) is coupled to the handle (104) of the gardening device (100) by a removable coupling, in particular, by means of a screw connection.

5. The attachment element (124) according to any one of the preceding claims,
wherein the connecting section (140) is configured to connect a first end (128) of the collecting bag fastening element (126) to the attachment element (124), and/or
wherein the collecting bag fastening element (126) is a belt or a strap.

6. The attachment element (124) according to any one of the preceding claims,
wherein the connecting section (140) is formed as a bar-shaped element extending between the two side parts (134),
in particular wherein one end of the bar-shaped element is connected to one of the two side parts (134) and another end of bar-shaped element is connected to another of the two side parts (134).

7. The attachment element (124) according to any one of the preceding claims,
wherein, in an operational position, the collecting bag fastening element (126) connects the collecting bag (122) and the gardening device (100), and/or wherein, in a storage position, the collecting bag (122) is hung onto the storage portion (142).

8. The attachment element (124) according to any one of the preceding claims,
wherein the attachment element (124) comprises two storage portions (142), one on each of the two side parts (134),
in particular wherein the two storage portions (142) are formed substantially identical.

9. The attachment element (124) according to any one of the preceding claims,
wherein the storage portion (142) is a hook-shaped portion extending from at least one of the two side parts (134).

10. A gardening device (100),
wherein an attachment element (124) according to any one of the preceding claims, is coupled to the gardening device (100), in particular to a handle (104) of the gardening device (100).

11. The gardening device (100) according to claim 10,
wherein a collecting bag fastening element (126) is connected to the attachment element (124),
wherein, in an operational position, the collecting bag fastening element (126) connects the collecting bag (122) and the gardening device (100) and supports the collecting bag (122).

12. The gardening device (100) according to claim 10 or claim 11,
wherein, in an operational position, the first end (128) of the collecting bag fastening element (126) is connected to the attachment element (124) and a second end (130) of the collecting bag fastening element (126) is connected to the collecting bag (122) by means of a coupling element (132), and/or wherein, in a storage position, the first end (128) of the collecting bag fastening element (126) is connected to the attachment element (124) and a second end (130) of the collecting bag fastening element (126) is connectable to the handle (104) by means of a coupling element (132).

13. The gardening device (100) according to claim 12,
wherein the coupling element (132) is a hook-shaped element.

14. The gardening device (100) according to any one of the claims 10 to 13, wherein the collecting bag fastening element (126) comprises an adaptable length.

15. The gardening device (100) according to any one of the claims 10 to 14, wherein the gardening device (100) is a lawnmower, in particular, a manual lawnmower.
